# EUROPEAN PATENT APPLICATION

(11) **EP 2 709 251 A2**
(43) Date of publication of application: **19.03.2014**
(21) Application number: 13183925.0
(22) Date of filing: 11.09.2013
(51) Int. Cl.: H02M 3/00

(54) **Power supply circuit**

(30) Priority: 14.09.2012 JP 2012203210
(71) Applicant: Funai Electric Co., Ltd., Osaka 574-0013 (JP)
(72) Inventor: Itou, Masaki, Daito-shi, Osaka 574-0013 (JP)
(74) Representative: Grünecker, Kinkeldey, Stockmair & Schwanhäusser

(57) **Abstract**

This power supply circuit (100) includes a comparison means (D1) configured to compare the value of a voltage based on a voltage input to a primary winding (1a) of a transformer (1) with the value of a voltage based on the full-wave rectified voltage of an alternating current source, a load circuit (8) supplied with power output from the secondary side of the transformer, and a stop means (5, 6, 9) configured to stop power supply to the load circuit.

## Description

### BACKGROUND OF THE INVENTION

### Field of the Invention

The present invention relates to a power supply circuit.

### Description of the Background Art

A power supply circuit supplying power to a load circuit is known in general, as disclosed in Japanese Patent No. 2671588.

Japanese Patent No. 2671588 discloses a power supply circuit supplying power to an LED (load circuit) lighted during standby. The power supply circuit is provided with a transistor (bipolar transistor) having a collector connected to the anode of the LED. The emitter of this transistor is grounded. Furthermore, the power supply circuit is so configured that a control signal for turning off the LED is input to the base of this transistor. When a main power supply is turned off, the control signal for turning off the LED is input to the base of the transistor, so that the transistor is turned on. Consequently, the anode side of the LED is grounded, whereby the LED is turned off. Thus, the LED can be quickly turned off as compared with the case where the LED is turned off by gradually decreasing the voltage of the main power supply (to zero) after the main power supply is turned off, for example. Japanese Patent No. 2671588 discloses no specific method for generating the control signal for turning off the LED.

In the power supply circuit according to Japanese Patent No. 2671588, the time required to reduce the full-wave rectified voltage of the alternating current source to less than a prescribed threshold is increased as the voltage of the alternating current source is raised in the case where the control signal for turning off the LED is generated on the basis of the full-wave rectified voltage of the alternating current source (in the case where the transistor is turned on when the full-wave rectified voltage of the alternating current source falls below the prescribed threshold), for example. Therefore, the time required to turn off the LED (load circuit) may disadvantageously be increased as the voltage of the alternating current source is increased.

### SUMMARY OF THE INVENTION

The present invention has been proposed in order to solve the aforementioned problem, and an object of the present invention is to provide a power supply circuit capable of suppressing an increase in the time required to stop power supply to a load circuit even when the voltage of an alternating current source is increased.

A power supply circuit according to an aspect of the present invention includes a transformer including a primary winding to which the voltage of an alternating current source is input, a comparison means configured to compare the value of a voltage based on the voltage input to the primary winding of the transformer with the value of a voltage based on the full-wave rectified voltage of the alternating current source, and a load circuit supplied with power output from the secondary side of the transformer, and a stop means configured to stop power supply to the load circuit on the basis of the comparison result of the comparison means.

In the case where the voltage of the alternating current source is increased (decreased), both the value of the voltage based on the voltage input to the primary winding of the transformer and the value of the voltage based on the full-wave rectified voltage of the alternating current source are also increased (decreased), and hence a difference between the value of the voltage based on the voltage input to the primary winding of the transformer and the value of the voltage based on the full-wave rectified voltage of the alternating current source does not significantly change when the alternating current source is in an on-state. Therefore, this power supply circuit according to the first aspect is configured to stop power supply to the load circuit provided on the secondary side of the transformer on the basis of the value of the voltage based on the voltage input to the primary winding of the transformer and the value of the voltage based on the full-wave rectified voltage of the alternating current source, as described above. Thus, an increase in the time required to stop power supply to the load circuit can be suppressed, unlike the case where power supply to the load circuit is stopped on the basis of either the value of the voltage based on the voltage input to the primary winding of the transformer or the value of the voltage based on the full-wave rectified voltage of the alternating current source increased as the voltage of the alternating current source is increased.

Preferably in the aforementioned power supply circuit according to the aspect, the comparison means includes a diode having a first side to which the voltage based on the voltage input to the primary winding of the transformer is input and a second side to which the voltage based on the full-wave rectified voltage of the alternating current source is input, and power supply to the load circuit is stopped as a result of current flowing to the diode when the value of the voltage based on the voltage input to the primary winding of the transformer exceeds the value of the voltage based on the full-wave rectified voltage of the alternating current source. According to this structure, current flows to the diode immediately after the value of the voltage based on the voltage input to the primary winding of the transformer exceeds the value of the voltage based on the full-wave rectified voltage of the alternating current source, and hence power supply to the load circuit can be promptly stopped.

Preferably in this case, the transformer further includes an auxiliary winding outputting the voltage based on the voltage input to the primary winding of the transformer, a voltage based on the voltage of the auxiliary winding is input to the first side of the diode, and power supply to the load circuit is stopped as a result of the current flowing to the diode when the value of the voltage based on the voltage of the auxiliary winding exceeds the value of the voltage based on the full-wave rectified voltage of the alternating current source. According to this structure, a voltage corresponding to the voltage (the voltage of the alternating current source) input to the primary winding of the transformer is generated in the auxiliary winding, and hence power supply to the load circuit can be easily stopped on the basis of the value of the voltage based on the voltage of the auxiliary winding and the value of the voltage based on the full-wave rectified voltage of the alternating current source.

Preferably in the aforementioned power supply circuit in which the transformer includes the auxiliary winding, the stop means includes a first switch element connected to the load circuit, supplying power to the load circuit by being turned on and a photocoupler provided between the diode and the first switch element, and current flows to the photocoupler as a result of the current flowing to the diode and the first switch element is turned off as a result of the current flowing to the photocoupler when the value of the voltage based on the voltage of the auxiliary winding exceeds the value of the voltage based on the full-wave rectified voltage of the alternating current source, so that power supply to the load circuit is stopped. According to this structure, the side of the diode (primary side) and the side of the load circuit (secondary side) are insulated by the photocoupler, so that power supply from the primary side to the load circuit can be reliably suppressed, and power supply to the load circuit can be promptly stopped by the first switch element.

Preferably in this case, the stop means further includes a first bipolar transistor having a base connected to the first side of the diode, an emitter connected to the photocoupler, and a grounded collector, and current flows to the photocoupler as a result of the current flowing to the diode and collector current flowing to the first bipolar transistor when the value of the voltage based on the voltage of the auxiliary winding exceeds the value of the voltage based on the full-wave rectified voltage of the alternating current source. According to this structure, power supply to the load circuit can be more promptly stopped by the first bipolar transistor operating at a relatively high speed.

Preferably in the aforementioned power supply circuit in which the stop means includes the first switch element and the photocoupler, the first switch element includes a second bipolar transistor having an emitter connected to the load circuit, and a base and a collector to which current based on the current flowing to the photocoupler flows. According to this structure, power supply to the load circuit can be more promptly stopped by the second bipolar transistor operating at a relatively high speed.

Preferably in the aforementioned power supply circuit in which the transformer includes the auxiliary winding, the auxiliary winding is grounded as a result of the current flowing to the diode when the value of the voltage based on the voltage of the auxiliary winding exceeds the value of the voltage based on the full-wave rectified voltage of the alternating current source, so that power supply to the load circuit is stopped. According to this structure, the voltage of the auxiliary winding is reduced to substantially zero when the value of the voltage based on the voltage of the auxiliary winding exceeds the value of the voltage based on the full-wave rectified voltage of the alternating current source, and hence power supply from the transformer to the secondary side (load circuit) is stopped. Consequently, the structure of the power supply circuit can be simplified, unlike the case where an element such as a photocoupler is separately provided to stop power supply to the load circuit.

Preferably in this case, the stop means further includes a third bipolar transistor having a base connected to the first side of the diode, an emitter connected to the auxiliary winding, and a grounded collector, and current flows to the diode and collector current flows to the third bipolar transistor when the value of the voltage based on the voltage of the auxiliary winding exceeds the value of the voltage based on the full-wave rectified voltage of the alternating current source, so that the auxiliary winding is grounded. According to this structure, power supply to the load circuit can be more promptly stopped by the third bipolar transistor operating at a relatively high speed.

Preferably, the aforementioned power supply circuit in which the transformer includes the auxiliary winding further includes a control portion to which the voltage of the auxiliary winding is input as a power supply and a second switch element to which a signal output from the control portion is input, configured to adjust the amount of current flowing to the primary winding of the transformer and includes a separately-excited power supply circuit performing on-off control of the second switch element with the signal output from the control portion. According to this structure, an increase in the time required to stop power supply to the load circuit can be suppressed even when the voltage of the alternating current source is increased in the separately-excited power supply circuit.

Preferably in the aforementioned power supply circuit including the diode, a voltage based on the voltage of the alternating current source converted into a direct current is input to the first side of the diode, and power supply to the load circuit is stopped as a result of the current flowing to the diode when the value of the voltage based on the voltage of the alternating current source converted into a direct current exceeds the value of the voltage based on the full-wave rectified voltage of the alternating current source. According to this structure, the voltage of the alternating current source converted into a direct current becomes a voltage corresponding to a voltage (the voltage of the alternating current source) input to the primary winding of the transformer, and hence power supply to the load circuit can be easily stopped on the basis of the voltage based on the voltage of the alternating current source converted into a direct current and the voltage based on the full-wave rectified voltage of the alternating current source.

Preferably in this case, the transformer further includes an auxiliary winding outputting the voltage based on the voltage input to the primary winding of the transformer, and the power supply circuit further includes a third switch element to which a voltage based on the voltage of the auxiliary winding is input, configured to adjust the amount of current flowing to the primary winding of the transformer and includes a self-excited power supply circuit performing on-off control of the third switch element with the voltage based on the voltage of the auxiliary winding. According to this structure, an increase in the time required to stop power supply to the load circuit can be suppressed even when the voltage of the alternating current source is increased in the self-excited power supply circuit.

Preferably in the aforementioned power supply circuit in which the voltage based on the voltage of the alternating current source converted into a direct current is input to the first side of the diode, the stop means further includes a first switch element connected to the load circuit, supplying power to the load circuit by being turned on, a photocoupler provided between the diode and the first switch element, and a fourth bipolar transistor having a base connected to the first side of the diode, an emitter connected to the photocoupler, and a grounded collector, and current flows to the photocoupler as a result of the current flowing to the diode and collector current flowing to the fourth bipolar transistor when the value of the voltage based on the voltage of the alternating current source converted into a direct current exceeds the value of the voltage based on the full-wave rectified voltage of the alternating current source. According to this structure, power supply to the load circuit can be more promptly stopped by the fourth bipolar transistor operating at a relatively high speed.

Preferably, the aforementioned power supply circuit including the diode further includes a full-wave rectifier diode having an anode side connected to the alternating current source and a cathode side connected to the cathode side of the diode. According to this structure, the alternating current source can be easily full-wave rectified by the full-wave rectifier diode having a relatively simple structure.

Preferably in this case, the power supply circuit further includes a resistor provided between the full-wave rectifier diode and the cathode side of the diode, configured to decrease the voltage of the alternating current source rectified by the full-wave rectifier diode by resistance division. According to this structure, a voltage on the cathode side of the diode can be brought close to a voltage on the anode side of the diode, and hence a potential difference between the voltage on the cathode side of the diode and the voltage on the anode side of the diode can be reduced. Consequently, the voltage on the cathode side of the diode falls below the voltage on the anode side of the diode within a relatively short period after the alternating current source is stopped, and hence the time required to stop power supply to the load circuit can be reduced.

Preferably in the aforementioned power supply circuit according to the aspect, the load circuit includes an LED lighted during standby. According to this structure, an increase in the time required to stop power supply to the LED can be suppressed, and hence the LED can be quickly turned off.

According to the present invention, as hereinabove described, an increase in the time required to stop power supply to the load circuit can be suppressed even when the voltage of the alternating current source is increased.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a power supply circuit according to a first embodiment of the present invention;
Fig. 2 is a circuit diagram of the power supply circuit according to the first embodiment of the present invention;
Fig. 3 illustrates voltages on the cathode side and anode side of a diode in the case where the source voltage of the power supply circuit according to the first embodiment of the present invention is 100 V;
Fig. 4 illustrates voltages on the cathode side and anode side of the diode in the case where the source voltage of the power supply circuit according to the first embodiment of the present invention is 130 V;
Fig. 5 illustrates voltages on the cathode side and anode side of the diode in the case where the source voltage of the power supply circuit according to the first embodiment of the present invention is 80 V;
Fig. 6 is a circuit diagram of a power supply circuit according to a second embodiment of the present invention;
Fig. 7 illustrates voltages on the cathode side and anode side of a diode of the power supply circuit according to the second embodiment of the present invention; and
Fig. 8 is a circuit diagram of a power supply circuit according to a third embodiment of the present invention.

### DESCRIPTION OF THE PREFERRED EMBODIMENTS

Embodiment of the present invention are hereinafter described with reference to the drawings.

### (First Embodiment)

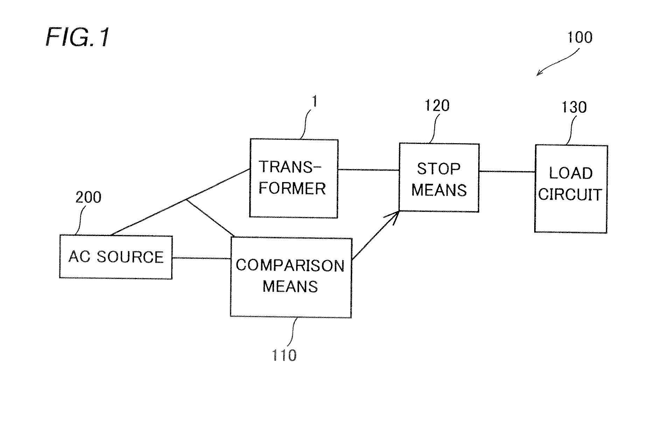

The schematic circuit structure of a power supply circuit 100 according to a first embodiment is now described with reference to Fig. 1.

The power supply circuit 100 includes a transformer 1 to which the voltage of an alternating current source 200 is input, comparison means 110 for comparing a voltage value based on the voltage input to the transformer 1 with a voltage value based on the full-wave rectified voltage of the alternating current source 200, a load circuit 130 to which power output from the secondary side of the transformer 1 is supplied, and stop means 120 for stopping power supply to the load circuit 130 on the basis of the comparison result of the comparison means 110.

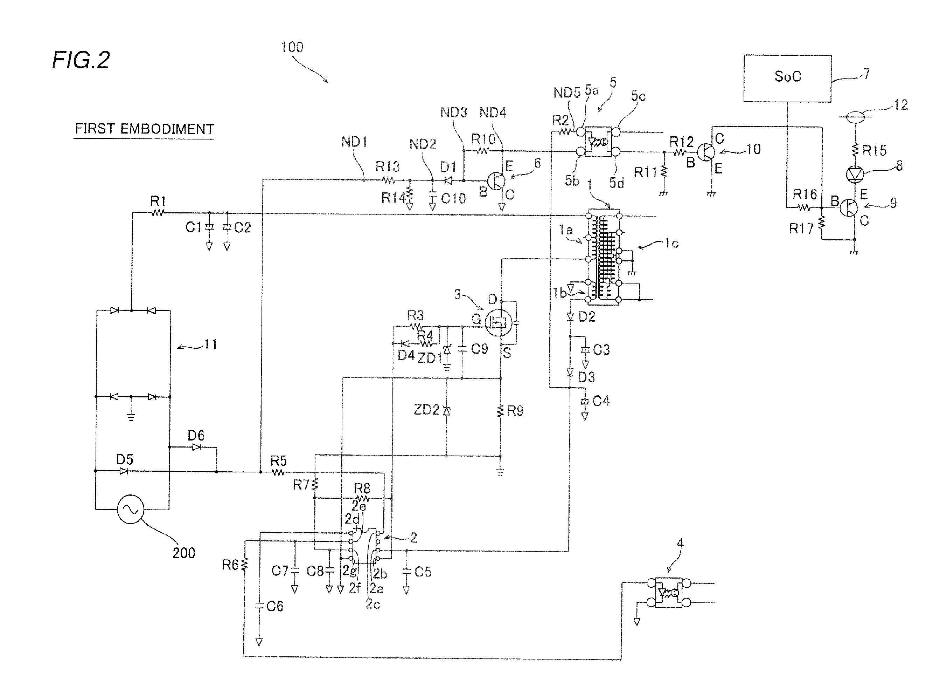

The detailed structure of the power supply circuit 100 according to the first embodiment of the present invention is now described with reference to Fig. 2.

The power supply circuit 100 according to the first embodiment includes the transformer 1 including a primary winding 1a, an auxiliary winding 1b, and a secondary winding ic, an IC 2 controlling a voltage output from the transformer 1, a transistor 3 having a gate G to which the output of the IC 2 is input, a photocoupler 4 connected to the IC 2, a photocoupler 5 connected to the transformer 1, a transistor 6 connected to the photocoupler 5, and a diode D1 connected to the transistor 6, as shown in Fig. 2. On the secondary side of the transformer 1 (photocoupler 5), an SoC (system on chip) 7, an LED 8, a transistor 9 connected to the LED 8, and a transistor 10 connected to the transistor 9 are provided. The LED 8 is an LED lighted during standby. The IC 2 is an example of the "control portion" in the present invention. The transistor 9 is an example of the "first switch element", the "stop means", or the "second bipolar transistor" in the present invention (corresponding to the aforementioned stop means 120). The transistor 3 is an example of the "second switch element" in the present invention. The LED 8 is an example of the "load circuit" in the present invention (corresponding to the aforementioned load circuit 130). The diode D1 is an example of the "comparison means" in the present invention (corresponding to the aforementioned comparison means 110). The photocoupler 5 is an example of the "stop means" in the present invention (corresponding to the aforementioned stop means 120). The transistor 6 is an example of the "stop means" or the "first bipolar transistor" in the present invention.

According to the first embodiment, the power supply circuit 100 is a separately-excited power supply circuit in which the amount of current flowing to the primary winding 1a (the amount of current output from the secondary winding 1c) is adjusted by performing on-off control of the transistor 3 with a signal output from the IC 2.

The power supply circuit 100 is so configured that the voltage of the alternating current (AC) source 200 converted into a direct current by a bridge circuit 11, a resistor R1, and capacitors C1 and C2 is input to a first end of the primary winding 1a of the transformer 1. A second end of the primary winding 1a is connected to the drain D of the transistor 3.

The auxiliary winding 1b is connected to the IC 2 (terminal 2a) through diodes D2 and D3. In other words, the power supply circuit 100 is so configured that the voltage of the auxiliary winding 1b is input as a power supply to the IC 2. Furthermore, the cathode side of the diode D2 is connected with a capacitor C3 including an electrolytic capacitor. The cathode side of the diode D3 is connected with a capacitor C4 including an electrolytic capacitor and a capacitor C5. The auxiliary winding 1b is connected to the photocoupler 5 (terminal 5a) through the diodes D2 and D3 and a resistor R2.

A terminal 2b of the IC 2 is connected to the gate G of the transistor 3 through resistors R3 and R4 and a diode D4. The power supply circuit 100 is so configured that the full-wave rectified voltage of the alternating current source 200 is input to a terminal 2c of the IC 2 through diodes D5 and D6 and a resistor R5. A terminal 2d of the IC 2 is connected to a capacitor C6. A terminal 2e of the IC 2 is connected to a capacitor C7 and is connected to the photocoupler, 4 through a resistor R6. The power supply circuit 100 is so configured that the photocoupler 4 outputs a feedback current based on current corresponding to the voltage of the secondary side of the transformer 1 to the IC 2. A terminal 2f of the IC 2 is connected to a capacitor C8 and is grounded through a resistor R7. A terminal 2g of the IC 2 is connected to the source S of the transistor 3. The diodes D5 and D6 are examples of the "full-wave rectifier diode" in the present invention.

The transistor 3 includes a field effect transistor, and on-off control of the transistor 3 is performed with the signal output from the IC 2, whereby the amount of current flowing to the primary winding 1a (the amount of current output from the secondary winding 1c) is adjusted. The gate G of the transistor 3 is connected with a Zener diode ZD1 and a capacitor C9. The source S of the transistor 3 is grounded through a resistor R9 and is connected to a Zener diode ZD2.

A terminal 5b of the photocoupler 5 is connected to the emitter E of the transistor 6 and is connected to the anode side of the diode D1 through a resistor R10. A terminal 5c of the photocoupler 5 is connected to (not shown) the secondary side of the transformer 1. A terminal 5d of the photocoupler 5 is grounded through a resistor R11 and is connected to the base B of the transistor 10 through a resistor R12.

The transistor 6 includes a bipolar transistor. The emitter E of the transistor 6 is connected to the terminal 5b of the photocoupler 5, as described above, and the base B of the transistor 6 is connected to the anode side of the diode D1. The collector C of the transistor 6 is grounded.

The anode side of the diode D1 is connected to the terminal 5b of the photocoupler 5 through the resistor R10, as described above. The cathode side of the diode D1 is connected to the cathode sides of the diodes D5 and D6 through a resistor R13. A capacitor C10 and a resistor R14 are provided between the cathode side of the diode D1 and the resistor R13. According to the first embodiment, the power supply circuit 100 is so configured that a voltage based on a voltage input to the primary winding 1a of the transformer 1 is input to a first side (anode side) of the diode D1 and a voltage based on the full-wave rectified voltage of the alternating current source 200 is input to a second side (cathode side) of the diode D1. Specifically, the power supply circuit 100 is so configured that the voltage of the auxiliary winding 1b based on the primary winding 1a is input to the anode side of the diode D1 through the resistor R2, the photocoupler 5, and the resistor R10 and the voltage of the alternating current source 200 full-wave rectified by the diodes D5 and D6 and resistance-divided by the resistors R13 and R14 is input to the cathode side of the diode D1.

According to the first embodiment, when the value of a voltage based on the voltage of the auxiliary winding 1b (the voltage input from the auxiliary winding 1b to the anode side of the diode D1 through the resistor R2, the photocoupler 5, and the resistor R10) exceeds the value of a voltage based on the full-wave rectified voltage of the alternating current source 200, power supply to the LED 8 is stopped as a result of current flowing to the diode D1 Specifically, when the value of the voltage based on the voltage of the auxiliary winding 1b exceeds the value of the voltage based on the full-wave rectified voltage of the alternating current source 200, current flows to the photocoupler 5 as a result of the current flowing to the diode D1 and the transistor 9 is turned off as a result of the current flowing to the photocoupler 5, so that power supply to the LED 8 is stopped.

The anode side of the LED 8 is connected to a power supply 12 through a resistor R15. The power supply 12 is a power supply based on the power of the secondary winding 1c of the transformer 1. The cathode side of the LED 8 is connected to the emitter E of the transistor 9 including a bipolar transistor. According to the first embodiment, a signal of an H level is supplied from the SoC 7 to the transistor 9 to turn on the transistor 9, whereby the transistor 9 supplies power to the LED 8 (passes current from the power supply 12 to the LED 8). The base B of the transistor 9 is connected to the SoC 7 through a resistor R16 and is connected to the collector C of the transistor 10. The collector C of the transistor 9 is grounded.

The transistor 10 includes a bipolar transistor. The base B of the transistor 10 is connected to the terminal 5d of the photocoupler 5 through the resistor R12, as described above, and the emitter E of the transistor 10 is grounded. The collector C of the transistor 10 is grounded through a resistor R17.

Simulations conducted for the operation of the power supply circuit 100 in the case where the alternating current source 200 is in an off-state are now described with reference to Figs. 2 to 5.

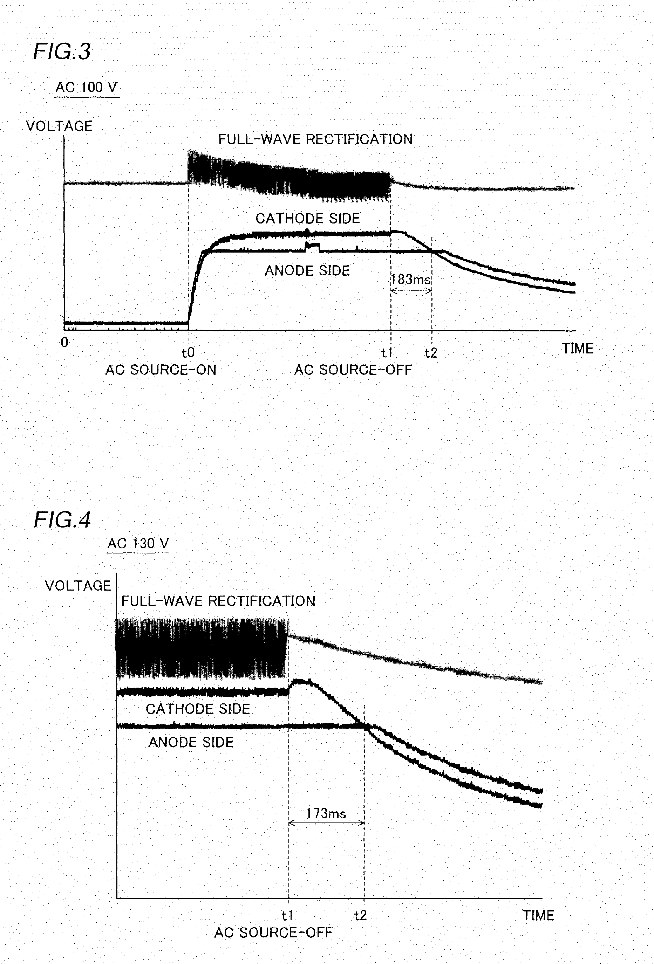

In the case where the alternating current source 200 (100 V) was in an on-state (from time t0 to time t1 in Fig. 3), it was confirmed that the full-wave rectified voltage of the alternating current source 200 (on a first side of the resistor R13: ND 1, see Fig. 2) was 92.4 V. Furthermore, it was confirmed that a voltage on the cathode side (ND 2) of the diode D1 became 18 V by resistance-dividing the voltage of the alternating current source 200 by the resistors R13 and R14. In the case where the voltage of the alternating current source 200 was 150 V and 200 V, it was confirmed that the voltage on the cathode side (ND 2) of the diode D1 became 27 V and 36 V, respectively. In addition, it was confirmed that the voltages of an ND 3 and an ND 4 on the anode side of the diode D1 became 15.4 V. Moreover, it was confirmed that the voltage of the terminal 5a (ND 5) of the photocoupler 5 became 16.2 V. In other words, in the case where the alternating current source 200 was in the on-state, it was confirmed that the value of the voltage (= 15.4 V, the voltage based on the voltage of the auxiliary winding 1b) on the anode side of the diode D1 was smaller than the value of the voltage (= 18 V) based on the full-wave rectified voltage of the alternating current source 200 and no current flowed to the diode D1.

As shown in Fig. 3, in the case where the alternating current source 200 was turned off at the time t1, it was confirmed that the voltage of the alternating current source 200 (the full-wave rectified voltage of the alternating current source 200) was gradually decreased over time. It was confirmed that the voltage on the cathode side of the diode D1 was also gradually decreased over time, following the decrease in the voltage of the alternating current source 200. On the other hand, it was confirmed that a voltage on the anode side of the diode D1 was substantially constant regardless of the lapse of time.

It was confirmed that the voltage on the anode side of the diode D1 exceeded the voltage on the cathode side of the diode D1 at time t2 after a lapse of 183 ms from the time t1. Thus, it was confirmed that current flowed to the diode D1 to turn on the transistor 6, current flowed to the primary side (between the terminal 5a and the terminal 5b) of the photocoupler 5, and current flowed to the secondary side (between the terminal 5c and the terminal 5d) of the photocoupler 5. Consequently, the transistor 10 is turned on, whereby the base B of the transistor 9 is grounded and the transistor 9 is turned off. Thus, it was confirmed that no current flowed to the LED 8 (power supply from the power supply 12 was stopped) to turn off the LED 8. It was confirmed that the LED 8 was immediately turned off after the time t2 (183 ms after turning off the alternating current source 200).

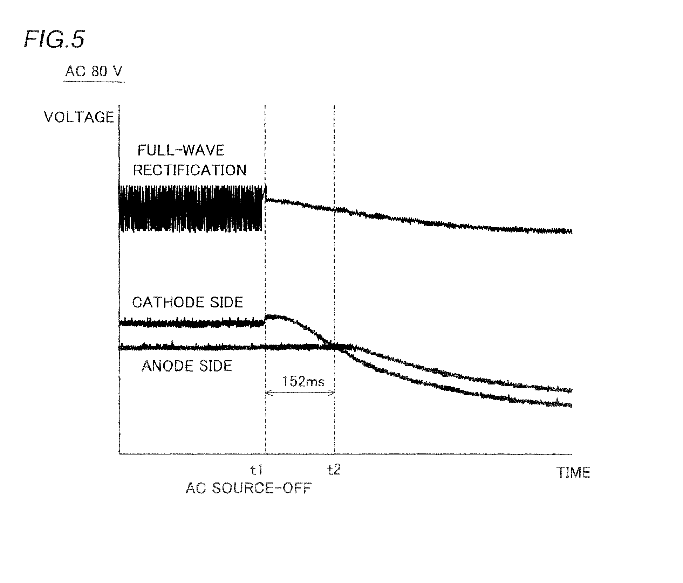

As shown in Fig. 4, in the case where the voltage of the alternating current source 200 was 130 V, it was confirmed that the voltage on the anode side of the diode D1 exceeded the voltage on the cathode side of the diode D1 at time t2 after a lapse of 173 ms from time t1 when the alternating current source 200 was turned off. As shown in Fig. 5, in the case where the voltage of the alternating current source 200 was 80 V, it was confirmed that the voltage on the anode side of the diode D1 exceeded the voltage on the cathode side of the diode D1 at time t2 after a lapse of 152 ms from time t1 when the alternating current source 200 was turned off.

In simulations conducted for a circuit (not shown) in which the LED 8 was turned off by only the voltage based on the full-wave rectified voltage of the alternating current source 200, in the case where the voltage of the alternating current source 200 was 80 V, 100 V, and 130 V, it was found that the time required to turn off the LED 8 was 97 ms, 166 ms, and 300 ms, respectively. In other words, in the case where the LED 8 was turned off by only the voltage based on the full-wave rectified voltage of the alternating current source 200, it was found that the time required to turn off the LED 8 was increased as the voltage of the alternating current source 200 was increased. On the other hand, according to the first embodiment, in the case where the voltage of the alternating current source 200 was 80 V, 100 V, and 130 V, it was found that the time from when the alternating current source 200 was turned off to when current flowed to the diode D1 (the time required to turn off the LED 8) was 152 ms, 183 ms, and 173 ms, and the time required to turn off the LED 8 was not increased even when the voltage of the alternating current source 200 was increased.

In the case where the voltage of the alternating current source 200 is increased (decreased), both the value of the voltage based on the voltage input to the primary winding 1a of the transformer 1 and the value of the voltage based on the full-wave rectified voltage of the alternating current source 200 are also increased (decreased), and hence a difference between the value of the voltage based on the voltage input to the primary winding 1a of the transformer 1 and the value of the voltage based on the full-wave rectified voltage of the alternating current source 200 does not significantly change when the alternating current source 200 is in the on-state. Therefore, according to the first embodiment, the power supply circuit 100 is configured to stop power supply to the LED 8 provided on the secondary side of the transformer 1 on the basis of the value of the voltage based on the voltage input to the primary winding 1a of the transformer 1 and the value of the voltage based on the full-wave rectified voltage of the alternating current source 200, as described above. Thus, an increase in the time required to stop power supply to the LED 8 can be suppressed, unlike the case where power supply to the LED 8 is stopped on the basis of either the value of the voltage based on the voltage input to the primary winding 1a of the transformer 1 or the value of the voltage based on the full-wave rectified voltage of the alternating current source 200 increased as the voltage of the alternating current source 200 is increased.

According to the first embodiment, as hereinabove described, the power supply circuit 100 is provided with the diode D1 having the first side (anode side) to which the voltage based on the voltage input to the primary winding 1a of the transformer 1 is input and the second side (cathode side) to which the voltage based on the full-wave rectified voltage of the alternating current source 200 is input and is configured to stop power supply to the LED 8 as a result of the current flowing to the diode D1 when the value of the voltage based on the voltage input to the primary winding 1a of the transformer 1 exceeds the value of the voltage based on the full-wave rectified voltage of the alternating current source 200. Thus, current flows to the diode D1 immediately after the value of the voltage based on the voltage input to the primary winding 1a of the transformer 1 exceeds the value of the voltage based on the full-wave rectified voltage of the alternating current source 200, and hence power supply to the LED 8 can be promptly stopped.

According to the first embodiment, as hereinabove described, the power supply circuit 100 is configured to stop power supply to the LED 8 as a result of the current flowing to the diode D1 when the voltage based on the voltage of the auxiliary winding 1b is input to the first side (anode side) of the diode D1 and the value of the voltage based on the voltage of the auxiliary winding 1b exceeds the value of the voltage based on the full-wave rectified voltage of the alternating current source 200. Thus, a voltage corresponding to the voltage (the voltage of the alternating current source 200) input to the primary winding 1a of the transformer 1 is generated in the auxiliary winding 1b, and hence power supply to the LED 8 can be easily stopped on the basis of the voltage based on the voltage of the auxiliary winding 1b and the voltage based on the full-wave rectified voltage of the alternating current source 200.

According to the first embodiment, as hereinabove described, the power supply circuit 100 is so configured that current flows to the photocoupler 5 as a result of the current flowing to the diode D1 and the transistor 9 is turned off as a result of the current flowing to the photocoupler 5 thereby stopping power supply to the LED 8 when the value of the voltage based on the voltage of the auxiliary winding 1b exceeds the value of the voltage based on the full-wave rectified voltage of the alternating current source 200. Thus, the side of the diode D1 (primary side) and the side of the LED 8 (secondary side) are insulated by the photocoupler 5, so that power supply from the primary side to the LED 8 can be reliably suppressed, and power supply to the LED 8 can be promptly stopped by the transistor 9.

According to the first embodiment, as hereinabove described, the power supply circuit 100 is provided with the IC 2 to which the voltage of the auxiliary winding 1b is input as the power supply and the transistor 3 to which the signal output from the IC 2 is input, configured to adjust the amount of current flowing to the primary winding 1a of the transformer 1 and includes the separately-excited power supply circuit performing on-off control of the transistor 3 with the signal output from the IC 2. Thus, an increase in the time required to stop power supply to the LED 8 can be suppressed even when the voltage of the alternating current source 200 is increased in the separately-excited power supply circuit 100.

According to the first embodiment, as hereinabove described, the power supply circuit 100 is so configured that current flows to the photocoupler 5 as a result of the current flowing to the diode D1 and collector current flowing to the transistor 6 including the bipolar transistor when the value of the voltage based on the voltage of the auxiliary winding 1b exceeds the value of the voltage based on the full-wave rectified voltage of the alternating current source 200. Thus, power supply to the LED 8 can be more promptly stopped by the transistor 6 including the bipolar transistor operating at a relatively high speed.

According to the first embodiment, as hereinabove described, the transistor 9 includes the bipolar transistor having the emitter E connected to the LED 8, and the base B and the collector C to which current based on the current flowing to the photocoupler 5 flows. Thus, power supply to the LED 8 can be more promptly stopped by the transistor 9 including the bipolar transistor operating at a relatively high speed.

According to the first embodiment, as hereinabove described, the power supply circuit 100 is provided with the full-wave rectifier diodes D5 and D6 having the anode sides connected to the alternating current source 200 and the cathode sides connected to the cathode side of the diode D1. Thus, the alternating current source 200 can be easily full-wave rectified by the diodes D5 and D6 each having a relatively simple structure.

According to the first embodiment, as hereinabove described, the power supply circuit 100 is provided with the resistors R13 and R14 provided between the full-wave rectifier diodes D5 and D6 and the cathode side of the diode D1, configured to decrease the voltage of the alternating current source rectified by the full-wave rectifier diodes D5 and D6 by resistance division. Thus, the voltage on the cathode side of the diode D1 can approach the voltage on the anode side of the diode D1, and hence a potential difference between the voltage on the cathode side of the diode D1 and the voltage on the anode side of the diode D1 can be reduced. Consequently, the voltage on the cathode side of the diode D1 falls below the voltage on the anode side of the diode D1 within a relatively short period after the alternating current source 200 is stopped, and hence the time required to stop power supply to the LED 8 can be reduced.

According to the first embodiment, as hereinabove described, the power supply circuit 100 is configured to stop power supply to the LED 8. Thus, the LED 8 can be quickly turned off.

### (Second Embodiment)

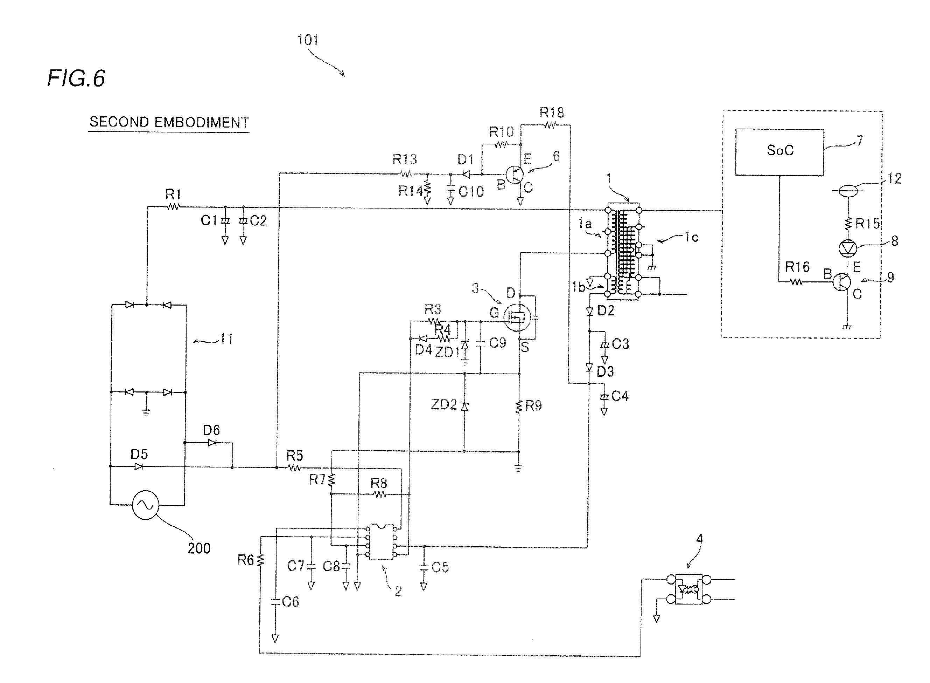

A power supply circuit 101 according to a second embodiment is now described with reference to Fig. 6. This power supply circuit 101 according to the second embodiment has a diode D1 whose anode side is connected to an auxiliary winding 1b, unlike the power supply circuit 100 according to the aforementioned first embodiment having the diode D1 whose anode side is connected to the photocoupler 5.

As shown in Fig. 6, in the power supply circuit 101, the auxiliary winding 1b is connected to the anode side of the diode D1 through resistors R18 and R10. The power supply circuit 101 is so configured that the full-wave rectified voltage of an alternating current source 200 is input to the cathode side of the diode D1 through diodes D5 and D6 and a resistor R13.

The anode side of an LED 8 is connected to a power supply 12 through a resistor R15. The cathode side of the LED 8 is connected to the emitter E of a transistor 9 including a bipolar transistor. The base B of the transistor 9 is connected to an SoC 7 through a resistor R16, and the collector C of the transistor 9 is grounded.

According to the second embodiment, in the power supply circuit 101, when the value of a voltage based on the voltage of the auxiliary winding 1b exceeds the value of a voltage based on the full-wave rectified voltage of the alternating current source 200, the auxiliary winding 1b is grounded as a result of current flowing to the diode D1 so that power supply to the LED 8 is stopped. Specifically, current flows to the diode D1, whereby a transistor 6 is turned on, and the auxiliary winding 1b is grounded. Thus, an IC 2 supplied with power from the auxiliary winding 1b is stopped. Consequently, no power is supplied to the secondary side (LED 8) of a transformer 1, and the LED 8 is turned off. The remaining structure of the power supply circuit 101 according to the second embodiment is similar to that of the power supply circuit 100 according to the aforementioned first embodiment. The transistor 6 is an example of the "stop means" or the "third bipolar transistor" in the present invention.

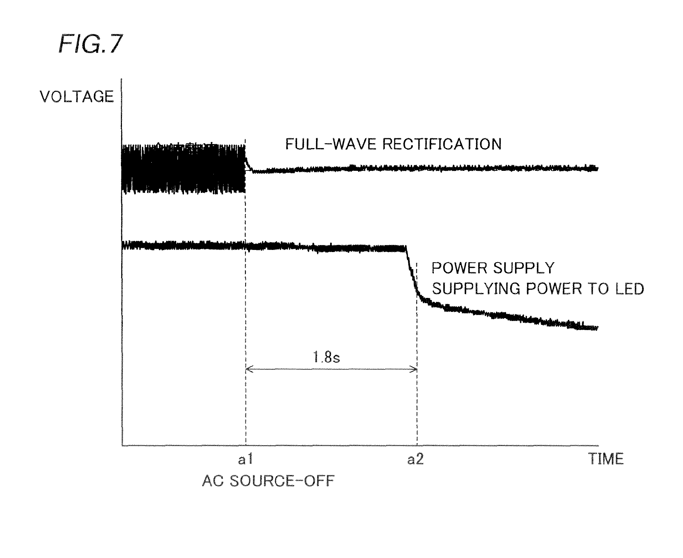

Simulations conducted for the operation of the power supply circuit 101 in the case where the alternating current source 200 is in an off-state are now described with reference to Figs. 6 and 7.

As shown in Fig. 7, the alternating current source 200 was switched from an on-state to the off-state at time a1 Thereafter, when the value of the voltage based on the voltage of the auxiliary winding 1b exceeded the value of the voltage based on the full-wave rectified voltage of the alternating current source 200 (not shown), the auxiliary winding 1b was grounded. On the other hand, it was confirmed that power (voltage) was supplied from the power supply 12 to the LED 8 (power remained) for a short period after the alternating current source 200 was turned off from the time a1 to time a2). In other words, the LED 8 was lighted with the remaining power from the time a1 to the time a2. It was confirmed that the voltage of the power supply 12 was sharply decreased immediately before the time a2 and the LED 8 was turned off at the time a2 (1.8 s after the alternating current source 200 was turned off). According to the second embodiment, the auxiliary winding 1b is grounded and the LED 8 is turned off on the basis of the value of the voltage based on the voltage of the auxiliary winding 1b and the value of the voltage based on the full-wave rectified voltage of the alternating current source 200, and hence a change in time from when the alternating current source 200 is turned off to when the LED 8 is turned off is conceivably small even when the voltage of the alternating current source 200 is increased.

According to the second embodiment, as hereinabove described, the power supply circuit 101 is so configured that the auxiliary winding 1b is grounded as a result of the current flowing to the diode D1 thereby stopping power supply to the LED 8 when the value of the voltage based on the voltage of the auxiliary winding 1b exceeds the value of the voltage based on the full-wave rectified voltage of the alternating current source 200. Thus, the voltage of the auxiliary winding 1b is reduced to substantially zero when the value of the voltage based on the voltage of the auxiliary winding 1b exceeds the value of the voltage based on the full-wave rectified voltage of the alternating current source 200, and hence power supply from the transformer 1 to the secondary side (LED 8) is stopped. Consequently, the structure of the power supply circuit 101 can be simplified, unlike the case where an element such as a photocoupler is separately provided to stop power supply to the LED 8.

According to the second embodiment, as hereinabove described, the power supply circuit 101 is so configured that current flows to the diode D1 and collector current flows to the transistor 6 including the bipolar transistor thereby grounding the auxiliary winding 1b when the value of the voltage based on the voltage of the auxiliary winding 1b exceeds the value of the voltage based on the full-wave rectified voltage of the alternating current source 200. Thus, power supply to the LED 8 can be more promptly stopped by the transistor 6 including the bipolar transistor operating at a relatively high speed.

### (Third Embodiment)

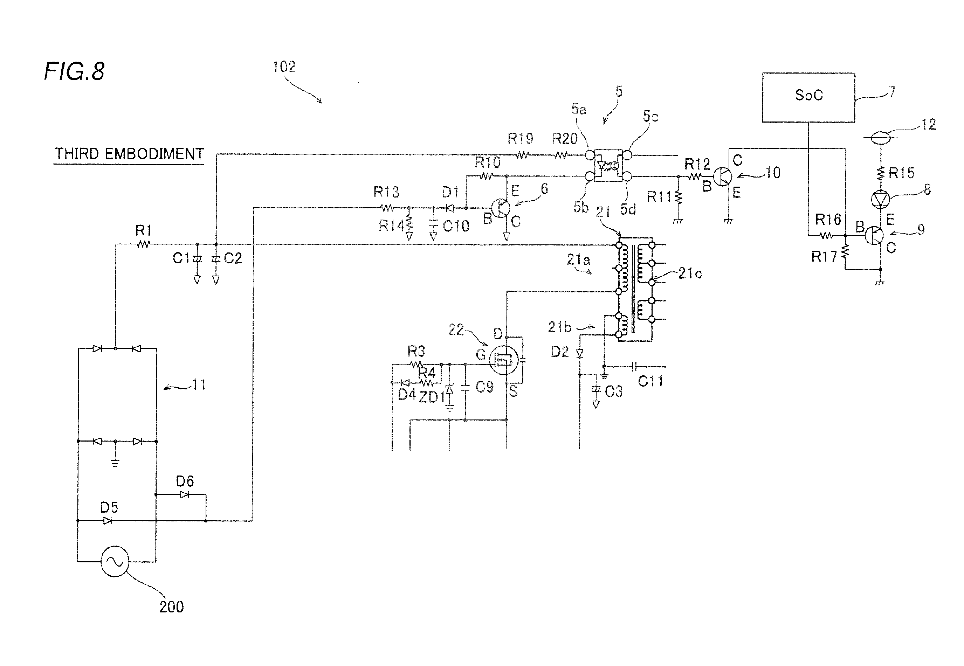

A power supply circuit 102 according to a third embodiment is now described with reference to Fig. 8. This power supply circuit 102 according to the third embodiment is a self-excited power supply circuit, unlike the power supply circuits 100 and 101 that are the separately-excited power supply circuits according to the aforementioned first and second embodiments.

As shown in Fig. 8, in the power supply circuit 102, a transformer 21 includes a primary winding 21a, an auxiliary winding 21b, and a secondary winding 21c. A first end of the auxiliary winding 21b is connected to a capacitor C11 and is grounded. According to the third embodiment, the power supply circuit 102 is the self-excited power supply circuit so configured that a voltage based on the voltage of the auxiliary winding 21b is input to the gate G of a transistor 22 configured to adjust the amount of current flowing to the primary winding 21a of the transformer 21 in order to perform on-off control of the transistor 22. The transistor 22 is an example of the "third switch element" in the present invention.

The power supply circuit 102 is so configured that the voltage of an alternating current source 200 converted into a direct current by a bridge circuit 11 and capacitors C1 and C2 is input to the anode side of a diode D1 through resistors R19 and R20, a photocoupler 5, and a resistor R10. The power supply circuit 102 is so configured that the full-wave rectified voltage of the alternating current source 200 is input to the cathode side of the diode D1 through diodes D5 and D6 and a resistor R13. According to the third embodiment, the power supply circuit 102 is configured to stop power supply to an LED 8 as a result of current flowing to the diode D1 when the value of a voltage based on the voltage of the alternating current source 200 converted into a direct current exceeds the value of a voltage based on the full-wave rectified voltage of the alternating current source 200. Specifically, current flows to the diode D1, whereby a transistor 6 is turned on and current flows to the photocoupler 5. Current flows to the photocoupler 5, whereby a transistor 10 is turned on, a transistor 9 is turned off, and power supply to the LED 8 is stopped. The remaining structure of the power supply circuit 102 according to the third embodiment is similar to that of the power supply circuit 100 according to the aforementioned first embodiment. The transistor 6 is an example of the "stop means" or the "fourth bipolar transistor" in the present invention.

According to the third embodiment, as hereinabove described, the power supply circuit 102 is configured to stop power supply to the LED 8 as a result of the current flowing to the diode D1 when the value of the voltage based on the voltage of the alternating current source 200 converted into a direct current exceeds the value of the voltage based on the full-wave rectified voltage of the alternating current source 200. Thus, the voltage of the alternating current source 200 converted into a direct current becomes a voltage corresponding to a voltage (the voltage of the alternating current source 200) input to the primary winding 21a of the transformer 21, and hence power supply to the LED 8 can be easily stopped on the basis of the voltage based on the voltage of the alternating current source 200 converted into a direct current and the voltage based on the full-wave rectified voltage of the alternating current source 200.

According to the third embodiment, as hereinabove described, the power supply circuit 102 is provided with the transistor 22 to which the voltage based on the voltage of the auxiliary winding 21b is input, configured to adjust the amount of current flowing to the primary winding 21a of the transformer 21 and includes the self-excited power supply circuit performing on-off control of the transistor 22 with the voltage based on the voltage of the auxiliary winding 21b. Thus, an increase in the time required to stop power supply to the LED 8 can be suppressed even when the voltage of the alternating current source 200 is increased in the self-excited power supply circuit 102.

According to the third embodiment, as hereinabove described, the power supply circuit 102 is so configured that current flows to the photocoupler 5 as a result of the current flowing to the diode D1 and collector current flowing to the transistor 6 including the bipolar transistor when the value of the voltage based on the voltage of the alternating current source 200 converted into a direct current exceeds the value of the voltage based on the full-wave rectified voltage of the alternating current source 200. Thus, power supply to the LED 8 can be more promptly stopped by the transistor 6 including the bipolar transistor operating at a relatively high speed.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while power supply to the LED provided on the secondary side of the transformer is stopped on the basis of the value of the voltage based on the voltage input to the primary winding of the transformer and the value of the voltage based on the full-wave rectified voltage of the alternating current source in each of the aforementioned first to third embodiments, the present invention is not restricted to this. For example, power supply to a load circuit other than the LED may alternatively be stopped on the basis of the value of the voltage based on the voltage input to the primary winding of the transformer and the value of the voltage based on the full-wave rectified voltage of the alternating current source.

While power supply to the LED provided on the secondary side of the transformer is stopped on the basis of the value of the voltage of the auxiliary winding or the value of the voltage of the alternating current source converted into a direct current and the value of the voltage based on the full-wave rectified voltage of the alternating current source in each of the aforementioned first to third embodiments, the present invention is not restricted to this. According to the present invention, power supply to the LED may alternatively be stopped on the basis of the value of the voltage based on the voltage input to the primary winding of the transformer other than the voltage of the auxiliary winding or the voltage of the alternating current source converted into a direction current and the value of the voltage based on the full-wave rectified voltage of the alternating current source.

While power supply to the LED is stopped as a result of the current flowing to the diode when the value of the voltage based on the voltage input to the primary winding of the transformer exceeds the value of the voltage based on the full-wave rectified voltage of the alternating current source in each of the aforementioned first to third embodiments, the present invention is not restricted to this. For example, a comparator may alternatively be provided instead of the diode, and power supply to the LED may alternatively be stopped as a result of a prescribed signal output from the comparator when the value of the voltage based on the voltage input to the primary winding of the transformer exceeds the value of the voltage based on the full-wave rectified voltage of the alternating current source.

While the LED (load circuit) is provided on the secondary side of the transformer in each of the aforementioned first to third embodiments, the present invention is not restricted to this. The power supply circuit according to the present invention may alternatively be employed as a circuit generating a trigger signal for controlling a power-on sequence or panel sequence, for example. In the case of the circuit generating the trigger signal for controlling the power-on sequence, the potential of various power supply lines can be turned to a low level to easily ensure the power-on sequence after an AC cord supplying alternating current power is pulled out of the wall and before the potential of the power supply lines drops when the power supply circuit according to the present invention is connected to a P-ON-H1 (a signal turned to a high level at the time of startup and turned to a low level during standby) for controlling a power supply. In the case of the circuit generating the trigger signal for controlling the panel sequence, a control signal can be turned to a low level to easily ensure the panel sequence at the time point at which an AC cord supplying alternating current power is pulled out of the wall when the power supply circuit according to the present invention is connected to a signal (LCD-PON, a signal turned to a high level at the time of startup and turned to a low level during standby) for controlling a power supply for a panel such as a DC-DC converter supplying power to the power supply of the panel.

While the transistor 9 including the bipolar transistor supplying power to the LED by being turned on is provided in each of the aforementioned first and third embodiments, the present invention is not restricted to this. For example, a transistor other than the bipolar transistor supplying power to the LED may alternatively be provided.

## Claims

1. A power supply circuit (100, 101, 102) comprising:
a transformer (1, 21) including a primary winding (1a 21a) to which a voltage of an alternating current source (200) is input;
a comparison means (110, D1) configured to compare a value of a voltage based on the voltage input to the primary winding of the transformer with a value of a voltage based on a full-wave rectified voltage of the alternating current source;
a load circuit (8, 130) supplied with power output from a secondary side of the transformer; and
a stop means (5, 6, 9, 120) configured to stop power supply to the load circuit on the basis of a comparison result of the comparison means.

2. The power supply circuit according to claim 1, wherein
the comparison means includes a diode (D1) having a first side to which the voltage based on the voltage input to the primary winding of the transformer is input and a second side to which the voltage based on the full-wave rectified voltage of the alternating current source is input, and
power supply to the load circuit is stopped as a result of current flowing to the diode when the value of the voltage based on the voltage input to the primary winding of the transformer exceeds the value of the voltage based on the full-wave rectified voltage of the alternating current source.

3. The power supply circuit according to claim 2, wherein
the transformer further includes an auxiliary winding (1b, 21b) outputting the voltage based on the voltage input to the primary winding of the transformer,
a voltage based on a voltage of the auxiliary winding is input to the first side of the diode, and
power supply to the load circuit is stopped as a result of the current flowing to the diode when a value of the voltage based on the voltage of the auxiliary winding exceeds the value of the voltage based on the full-wave rectified voltage of the alternating current source.

4. The power supply circuit according to claim 3, wherein
the stop means includes a first switch element (9) connected to the load circuit, supplying power to the load circuit by being turned on and a photocoupler (5) provided between the diode and the first switch element, and
current flows to the photocoupler as a result of the current flowing to the diode and the first switch element is turned off as a result of the current flowing to the photocoupler when the value of the voltage based on the voltage of the auxiliary winding exceeds the value of the voltage based on the full-wave rectified voltage of the alternating current source, so that power supply to the load circuit is stopped.

5. The power supply circuit according to claim 4, wherein
the stop means further includes a first bipolar transistor (6) having a base connected to the first side of the diode, an emitter connected to the photocoupler, and a grounded collector, and
current flows to the photocoupler as a result of the current flowing to the diode and collector current flowing to the first bipolar transistor when the value of the voltage based on the voltage of the auxiliary winding exceeds the value of the voltage based on the full-wave rectified voltage of the alternating current source.

6. The power supply circuit according to claim 4, wherein
the first switch element includes a second bipolar transistor (9) having an emitter connected to the load circuit, and a base and a collector to which current based on the current flowing to the photocoupler flows.

7. The power supply circuit according to claim 3, wherein
the auxiliary winding is grounded as a result of the current flowing to the diode when the value of the voltage based on the voltage of the auxiliary winding exceeds the value of the voltage based on the full-wave rectified voltage of the alternating current source, so that power supply to the load circuit is stopped.

8. The power supply circuit according to claim 7, wherein
the stop means further includes a third bipolar transistor (6) having a base connected to the first side of the diode, an emitter connected to the auxiliary winding, and a grounded collector, and
current flows to the diode and collector current flows to the third bipolar transistor when the value of the voltage based on the voltage of the auxiliary winding exceeds the value of the voltage based on the full-wave rectified voltage of the alternating current source, so that the auxiliary winding is grounded.

9. The power supply circuit according to claim 3, further comprising:
a control portion (2) to which the voltage of the auxiliary winding is input as a power supply; and
a second switch element (3) to which a signal output from the control portion is input, configured to adjust an amount of current flowing to the primary winding of the transformer,
including a separately-excited power supply circuit performing on-off control of the second switch element with the signal output from the control portion.

10. The power supply circuit according to claim 2, wherein
a voltage based on the voltage of the alternating current source converted into a direct current is input to the first side of the diode, and
power supply to the load circuit is stopped as a result of the current flowing to the diode when a value of the voltage based on the voltage of the alternating current source converted into a direct current exceeds the value of the voltage based on the full-wave rectified voltage of the alternating current source.

11. The power supply circuit according to claim 10, wherein
the transformer further includes an auxiliary winding (1b, 21b) outputting the voltage based on the voltage input to the primary winding of the transformer,
the power supply circuit further comprising a third switch element (22) to which a voltage based on a voltage of the auxiliary winding is input, configured to adjust an amount of current flowing to the primary winding of the transformer,
including a self-excited power supply circuit performing on-off control of the third switch element with the voltage based on the voltage of the auxiliary winding.

12. The power supply circuit according to claim 10, wherein
the stop means further includes a first switch element (9) connected to the load circuit, supplying power to the load circuit by being turned on, a photocoupler (5) provided between the diode and the first switch element, and a fourth bipolar transistor (6) having a base connected to the first side of the diode, an emitter connected to the photocoupler, and a grounded collector, and
current flows to the photocoupler as a result of the current flowing to the diode and collector current flowing to the fourth bipolar transistor when the value of the voltage based on the voltage of the alternating current source converted into a direct current exceeds the value of the voltage based on the full-wave rectified voltage of the alternating current source.

13. The power supply circuit according to claim 2, further comprising a full-wave rectifier diode (D5, D6) having an anode side connected to the alternating current source and a cathode side connected to a cathode side of the diode.

14. The power supply circuit according to claim 13, further comprising a resistor (R13, R14) provided between the full-wave rectifier diode and the cathode side of the diode, configured to decrease the voltage of the alternating current source rectified by the full-wave rectifier diode by resistance division.

15. The power supply circuit according to claim 1, wherein
the load circuit includes an LED (8) lighted during standby.
